# EUROPÄISCHE PATENTSCHRIFT

(11) **EP 0 524 617 B1**
(45) Veröffentlichungstag und Bekanntmachung des Hinweises auf die Patenterteilung: **10.09.1997**
(21) Anmeldenummer: 92112506.8
(22) Anmeldetag: 22.07.1992
(51) Int. Cl.: F16B 23/00, B25B 13/06, B25B 15/00

(54) **Schraubenantriebsausbildung**
Screw head driving geometry
Configuration d'entraînement de tête de vis

(30) Priorität: 24.07.1991 DE 4124472
(43) Veröffentlichungstag der Anmeldung: 27.01.1993
(73) Patentinhaber: Adolf Würth GmbH & Co. KG, D-74653 Künzelsau (DE)
(72) Erfinder: Schuster, Armin, W-7119 Forchtenberg (DE)
(74) Vertreter: Patentanwälte Ruff, Beier, Schöndorf und Mütschele

(56) Entgegenhaltungen:
- EP-A- 0 488 541
- WO-A-83/02983
- AT-B- 388 215
- DE-A- 3 501 414
- FR-A- 2 211 068
- US-A- 3 584 667
- US-A- 3 656 397

## Beschreibung

Die Erfindung betrifft eine Schraube mit einer Vertiefung oder einem Vorsprung zum Einsetzen oder Ansetzen eines Werkzeugs bzw. eine Schraubenantriebsausbildung.

Bei einer weit verbreiteten Schraube ist die Vertiefung zum Einsetzen eines Schraubenziehers kreuzförmig gestaltet, so daß die Schraube auch als Kreuzschlitzschraube bekannt ist. Die Seitenwände der Vertiefung, die zur Übertragung des vom Bediener aufgewandten Drehmoments vorhanden sind, verlaufen in einer bestimmten Neigung gegenüber einem Längsschnitt der Schraube. Beim Einleiten eines Drehmoments wird ein Teil der Kraft aufgrund des schrägen Verlaufs in eine Kraft umgeleitet, die den Schraubendreher aus dem Schlitz herauszudrängen versucht. Bei schwergängiger Schraube entsteht also eine Tendenz, die den Schraubendreher aus dem Schlitz herausdrückt. Auf diese Weise wird die zum Eindrehen der Schraube zur Verfügung stehende Drehkraft beschränkt. Der schräge Verlauf der Seitenwände ist zur Erzielung einer guten Sitzwirkung und zur Zentrierung beim Einsetzen des Schraubendrehers sinnvoll.

Es ist ebenfalls bekannt, in Schraubenköpfen Vertiefungen anzubringen, deren Seitenwände parallel zu der Längsachse der Schraube verlaufen. Hier entsteht zwar keine Kraftkomponente, die den Schraubendreher wieder aus der Vertiefung herausdrückt, jedoch treten hier andere Probleme auf. Um das Einsetzen des Werkzeugs zu ermöglichen, muß dieses eine etwas kleinere Abmessung als die Vertiefung aufweisen. Dies bedeutet, daß um das Werkzeug herum allseits ein Spalt vorhanden sein muß. Beim Einleiten eines Drehmoments tritt dann aber eine Anlage an nur einzelnen Vorsprüngen auf, die in der Regel nur linienförmig ist. Berücksichtigt man nun noch, daß das Werkzeug und/oder die Schraube von der idealen gewünschten Form aufgrund fertigungsbedingter Toleranzen abweichen kann, so können Fälle auftreten, wo von mehreren Anlageflächen nur zwei benutzt werden. Ein Beispiel für eine derartige Ausnehmungsform ist eine sechseckige Vertiefung oder auch eine Vertiefung, die von aneinander anstoßenden Kreisbögen begrenzt ist. Diese können abwechselnd nach innen und außen gebogen sein, oder auch alle in der gleichen Richtung.

Bei einer bekannten Antriebsausbildung (WO-A-8 302 983) sind mehrere konvex gewölbte Seitenflächen vorhanden, deren Berührungskanten abwechselnd nach außen und innen gerichtete Kanten bilden.

Weiterhin ist ein Befestiger und ein Antriebswerkzeug hierfür bekannt (AT-B-388 215), bei dem an dem Kopf des Befestigers ebene, abgeschrägte Flächen vorhanden sind, die gegenüber der Achse des Befestigers unter einem spitzen Winkel verlaufen.

Weiterhin bekannt ist eine Schraube (DE-A-35 01 414), bei der eine Antriebsausnehmung und dazugehörige Werkzeug einzelne radiale Flügel mit radialen ebenen Seitenwänden aufweist. Die Außenseiten der Flügel liegen auf einer konischen oder pyramidenförmigen, zur Längsachse der Schraube koaxialen Fläche. Aufgrund der radial verlaufenden Seitenflächen der Flügel haben diese eine nach außen hin zunehmende Breite, die aber zur Festigkeit des Werkzeugs nichts beiträgt. Bei einer von der mathematisch gewünschten Form abweichenden Form des Werkzeugs zum Eindrehen der Schraube treten bei dieser Art der Ausbildung linienförmige Berührungen an den einzelnen Flügeln auf, wobei ggf. auch ein Anliegen nur an einigen der sechs Flügel auftritt.

Bei einer weiteren bekannten Schraubenkopfform (US-A- 3 584 667) ist der Außenumfang der zylindrischen Ausnehmung bzw. des zylindrischen Vorsprungs von abwechselnd nach innen und außen gerichteten tangential ineinander übergehenden Kreisbögen gebildet, wobei die nach innen gerichteten Kreisbögen den doppelten Durchmesser haben wie die nach außen gerichteten. Aufgrund dieser Ausbildung wird die Anlagefläche zwischen dem Werkzeug und der Schraube vergrößert und liegt nicht mehr auf einer Linie. Gleichzeitig entstehen aufgrund des erforderlichen Spaltes zwischen Werkzeug und Schraubenkopf Kräfte, die das Werkzeug quer zur Längsrichtung beaufschlagen. Dies führt zwar zu einer verbesserten Anlage für die Übertragung des Drehmoments, möglicherweise aber dazu, daß das Werkzeug außermittig angeordnet ist.

Der Erfindung liegt die Aufgabe zugrunde, eine Antriebsausbildung für eine Schraube zu schaffen, bei der eine gute Führung des Werkzeugs in der Schraube sowie die Übertragung eines hohen Drehmomentes gewährleistet ist, ohne daß die Gefahr eines Herausdrückens des Werkzeugs gegeben ist. Die Schraube soll sich insbesondere für das maschinelle Einschrauben eignen. Die Standzeit der Werkzeuge zur Herstellung der Schraube soll verlängert werden.

Zur Lösung dieser Aufgabe schlägt die Erfindung eine Schraube mit den Merkmalen der unabhängigen Ansprüche vor. Weiterbildungen sind Gegenstand der Unteransprüche. Zur Betätigung der von der Erfindung vorgeschlagenen Schraube schlägt die Erfindung einen Schraubendreher mit den Merkmalen der entsprechenden Ansprüche vor. Unter Schraubendreher soll jedes Schraubenantriebswerkzeug, auch ein Schraubenschlüssel, verstanden werden.

Dadurch, daß die nicht auf der Kegelfläche liegenden Teile der Seitenwand im wesentlichen parallel zur Drehachse der Schraube verlaufen, also in jedem Längsschnitt parallel zur Längsachse der Schraube, ergeben sich keine Kraftkomponenten, die den Schraubendreher aus der Vertiefung herausdrücken oder den Schraubenschlüssel vom Vorsprung abgleiten lassen. Die Kegelflächen an der Schraube und/ oder dem Schraubendreher können ein derartiges Abdrehen des Werkzeugs nicht bewirken, da sie keine radial verlaufenden Flächenteile aufweisen.

Mit der von der Erfindung vorgeschlagenen Schraube erfolgt die Führung des Werkzeuges an der Kreiskegelfläche, während zur Übertragung des Werkzeugs die über die Kegelfläche nach außen oder innen vorstehenden unrunden Teile dienen. Durch die Führung wird gleichzeitig eine Zentrierung des Werkzeugs bewirkt, so daß auch aufgrund von Toleranzen ungleichmäßig ausgebildete Werkzeuge und/oder Schrauben nicht ungleichmäßig aneinander anliegen.

Die Kegelfläche kann bei einer Vertiefung sowohl im inneren Bereich der Seitenwände vorhanden sein als auch in ihrem äußeren Bereich. Im folgenden wird daher auch von einem inneren und einem äußeren Kegel gesprochen.

Weitere Merkmale, Einzelheiten und Vorzüge der Erfindung ergeben sich aus der folgenden Beschreibung einer bevorzugten Ausführungsform der Erfindung sowie anhand der Zeichnung. Hierbei zeigen:
- Fig. 1: eine Aufsicht auf das Antriebsende einer Schraube mit einer darin angeordneten Vertiefung;
- Fig. 2: eine Seitenansicht des freien Endes eines Schraubendreherwerkzeugs;
- Fig. 3: einen Schnitt durch das Antriebsende der Schraube in Fig. 1;
- Fig. 4: eine perspektivische Ansicht des Werkzeugendes der Fig. 3;
- Fig. 5: eine Aufsicht auf das Antriebsende einer Senkkopfschraube mit einer geänderten Antriebsausnehmung;
- Fig. 6: einen Längsschnitt durch das Schraubenantriebsende der Senkkopfschraube nach Fig. 5.

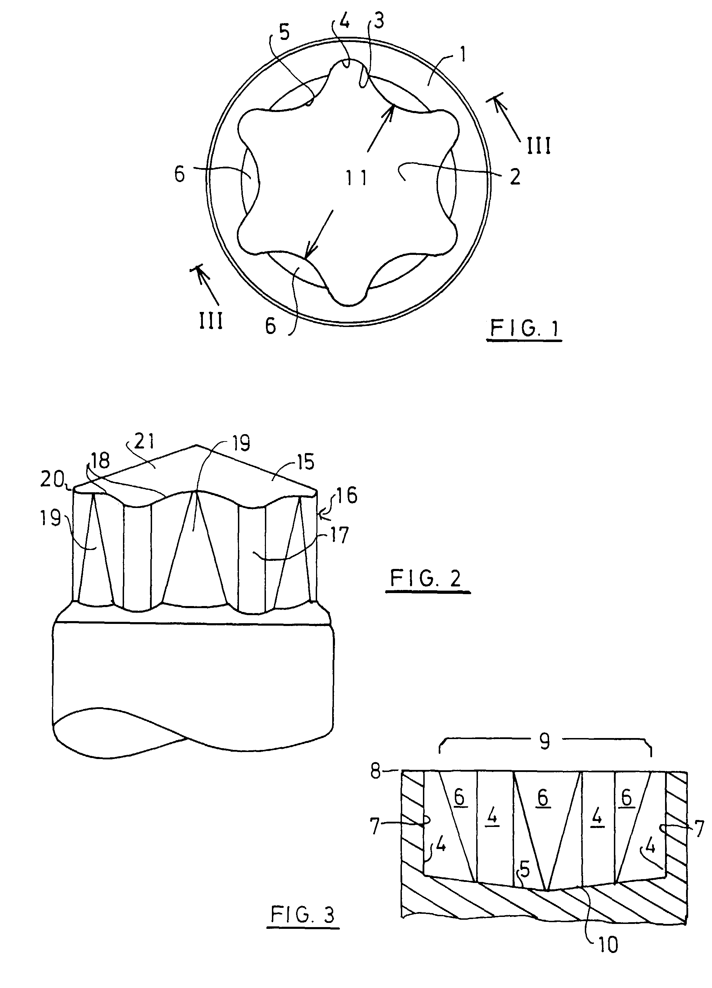

Fig. 1 zeigt eine Aufsicht auf einen Schraubenkopf, wie er am Ende einer Schraube angeordnet sein kann. In diesem Schraubenende 1 ist eine Vertiefung 2 eingeformt, was beispielsweise durch Kaltfließpressen o.dgl. geschehen kann. Die Ausnehmung 2 dient zur Aufnahme eines Schraubenantriebs-Werkzeugs, beispielsweise eines Schraubendrehers oder eines Schraubereinsatzes. Damit ein Drehmoment übertragen werden kann, bildet die Seitenwand 3 der Vertiefung 2 eine Kontur, die von einer Kreisform abweicht. Im dargestellten Ausführungsbeispiel wird die Außenkontur von sechs nach außen gebogenen Kreisbögen 4 gebildet, die durch nach innen gebogene Kreisbögen 5 miteinander verbunden sind, wobei die nach innen gekrümmten Kreisbögen 5 den doppelten Radius aufweisen. Die Seitenwand 3 der Vertiefung 2 wird in ihrem radial nach innen gerichteten Bereich, also im Bereich der nach innen gerichteten Kreisbögen 5, von Flächen 6 gebildet, die gleichmäßig über den Umfang der Vertiefung 2 verteilt sind und auf einer Kegelfläche liegen. Die Kegelfläche gehört zu einem gedachten Kegel, der so orientiert ist, daß die Spitze des Kegels in die Vertiefung 2 hineinzeigt.

Anstelle der von abwechselnd konkav und konvex gekrümmten Kreisbögen gebildeten Außenkontur der Vertiefung 2 könnte auch eine Vertiefung in dem Schraubenkopf angeordnet sein, deren Außenkontur von einem regelmäßigen Mehreck, beispielsweise einem Sechseck, gebildet ist. Auch in diesem Fall verlaufen die einzelnen Teile der Seitenwand gegenüber einem festen Radius abwechselnd nach außen und nach innen. Auch hier könnte die Vertiefung im Innenrandbereich der Seitenwand von derartigen Kegelflächen 6 gebildet sein.

Der Querschnitt der Fig. 3 zeigt die Vertiefung 2 von der Seite. Der Querschnitt der Fig. 3 ist längs der Linie III-III in Fig. 1 gelegt, d.h. er erstreckt sich längs der größten Querabmessung der Vertiefung 2. Die rechts und links im Querschnitt zu sehenden Seitenwände gehören also zu den nach außen gerichteten Kreisbögen 4, wobei zu sehen ist, daß diese Seitenwände 7 parallel zu der Längs- bzw. Drehachse der Schraube verlaufen.

Zwischen je zwei nach außen gerichteten Kreisbögen 4 ist jeweils eine Kegelmantelfläche 6 zu sehen. Diese Flächen 6 sind so ausgebildet, daß sie sich in das Innere der Vertiefung 2 hinein in ihrer Breite und in ihrem Abstand von der Drehachse verringern. Sie bilden also eine Art Kegelstumpf.

Wie sowohl der Aufsicht der Fig. 1 als auch dem Schnitt der Fig. 3 zu entnehmen ist, ist am Außenende 8 der Vertiefung 2 der Durchmesser 9 des Kegels, auf dem die Kegelflächen 6 liegen, kleiner als die maximale Querabmessung der Vertiefung 2, die durch den Abstand der beiden Seitenwände 7 definiert ist. Im Bereich des Bodens 10 der Vertiefung 2 ist der Durchmesser des Kegels gleich der minimalen Querabmessung 11 der Vertiefung, die in Fig. 1 eingezeichnet ist.

Würde man die Kegelflächen nicht im radialen Innenbereich der Vertiefung anbringen, sondern im radialen Außenbereich, so würde der Durchmesser des Kegels am Außenende 8 der Vertiefung gleich dem maximalen Querdurchmesser und am Boden größer als die minimale Querabmessung 11 sein, was einer Kreuzschlitzschraube entsprechen würde.

Fig. 2 zeigt das Ende eines Schraubereinsatzes, mit dem die Schraube nach Fig. 1 und 3 antreibbar ist. Am Ende des Werkzeugs ist ein Vorsprung 15 angeordnet, der eine ihn rings um-gebende Seitenwand 16 aufweist. Die Seitenwand 16 wird von nach außen gerichteten Kreisbögen 17 und zwischen diesen angeordneten, nach innen gebogenen Kreisbogenabschnitten 18 mit doppeltem Radius gebildet. Eine Aufsicht auf das Ende der Fig. 2 würde von der Fig. 1 nicht unterscheidbar sein. In dem radial inneren Seitenwandbereich ist die Seitenwand von Kegelmantelflächen 19 gebildet, die alle auf einem Kegel liegen. Die Spitze des Kegels zeigt in Fig. 2 nach oben, also in Richtung von dem Werkzeugende weg bzw. in die Ausnehmung 2 der Fig. 2 hinein.

Am freien Ende 20 des Vorsprungs 15 ist der Durchmesser des Kegels gleich der minimalen Querabmessung des Vorsprungs 15, während an dem dem freien Ende abgewandten Ende des Vorsprungs 15 der Durchmesser des Kegels kleiner ist als die maximale Querabmessung des Vorsprungs 15.

Das freie Ende des Vorsprungs 15 wird von einem sehr flachen Kegel 21 gebildet, der etwa dem kegelförmigen Boden 10 der Vertiefung 2 entspricht.

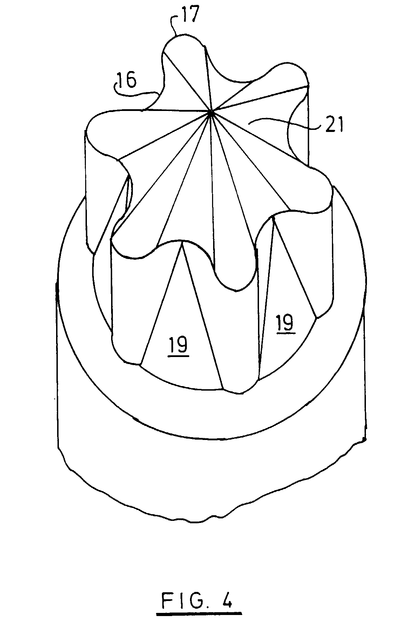

Fig. 4 zeigt in perspektivischer Ansicht die Anordnung der Fig. 2. Um die Flachkegelform des Kegels 21 besser darzustellen, sind einzelne Linien gezeichnet, die aber keine Rippen o.dgl. darstellen sollen.

Setzt man ein Werkzeug mit dem Vorsprung nach Fig. 2 in die Vertiefung 2 des Schraubenkopfes ein, so gelangen die Kegelflächen 19 und 6 zur gegenseitigen Anlage. Sie führen das Werkzeug spielfrei bei der Drehung um die Dreh- bzw. Längsachse der Schraube. Dadurch gelangen die abgerundeten Vorsprünge 17 des Werkzeugs in den nach außen gerichteten Kreisbögen 4 der Seitenwand der Vertiefung 2 zur Anlage. Aufgrund der Zentrierung des Werkzeugs gegenüber der Schraube mit Hilfe der beiden Kegel 6, 19 führt dies zu einer gleichmäßigeren Anlage der Vorsprünge des Querschnitts des Werkzeugvorsprungs. Es treten bei der Drehung ausschließlich Kräfte auf, die in Drehrichtung wirken, so daß das Werkzeug nicht aus der Vertiefung herausgedrückt wird.

Während die Fig. 1 und 3 eine Vertiefung in einem Antriebsende einer Schraube und die Fig. 2 und 4 die komplementär geformten Teile eines Werkzeugs darstellen, wäre es selbstverständlich auch möglich, umgekehrt vorzugehen, also am Schraubenende einen Vorsprung anzubringen, wie ihn die Fig. 2 und 4 darstellen, und im Werkzeug eine Vertiefung anzuordnen, wie sie in den Fig. 1 und 3 dargestellt ist.

Die Kegelfläche kann nicht nur bei der dargestellten Form der Vertiefung bzw. des Vorsprungs Verwendung finden. Auch bei einem normalen Schlitz in einem Schraubenkopf kann eine derartige Kegelfläche zu besonders guten Ergebnissen führen. Eine zentrale Kegelfläche bei einem Schlitz kann beispielsweise das seitliche Abgleiten verhindern, das bei Schlitzschrauben auftreten kann.

Ähnliches gilt auch für die Kreuzschlitzschrauben.

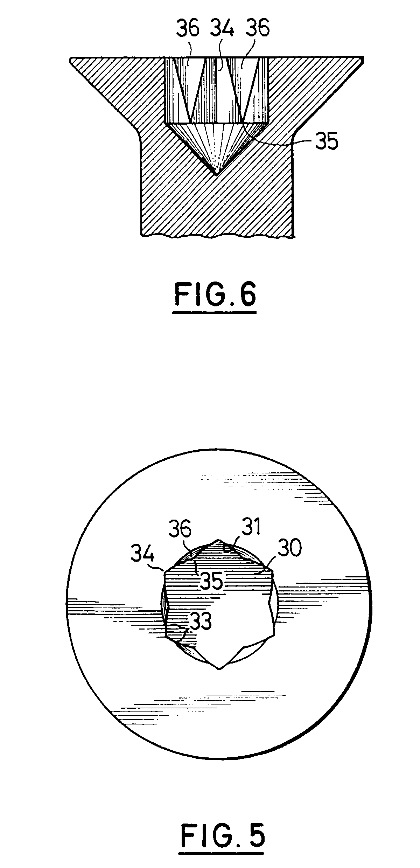

In Fig. 5 und 6 ist eine Schraube dargestellt, bei der die Antriebsausbildung 30 wiederum eine Seitenwand 31 aufweist, die auf der Zylinderfläche eines Zylinders liegt. Die Außenkontur wird von zusammengesetzten Kreisbögen 33 gebildet, die so angeordnet sind, daß abwechselnd nach außen gerichtete Vorsprünge 34 und nach innen gerichtete Vorsprünge 35 gebildet sind. Alle Kreisbögen 33 sind so orientiert, daß die Krümmung immer nach außen zeigt. Im Bereich der nach innen gerichteten Vorsprünge 35 sind die Seitenwände auf eine Kegelfläche 36 gelegt, wobei der maximale Durchmesser der Kegelfläche 36 kleiner ist als die maximale Querabmessung der Antriebsausnehmung 30, während der kleinste Durchmesser der Kegelfläche 36 der kleinsten Querabmessung der Antriebsausnehmung 30 gleich ist. Die Anordnung der Kegelfläche geht aus Fig. 6 deutlich hervor, wo zu sehen ist, daß diese Kegelflächen so angeordnet sind, daß die nach außen gerichteten Kanten 34 der Antriebsausnehmung 30 erhalten bleiben, während die nach innen gerichteten Vorsprünge 35 durch die Kegelfläche 36 abgeflacht sind.

Auch bei der in Fig. 5 und 6 dargestellten Form der Seitenwand 31 der Ausnehmung 30 entstehen beim Antrieb Kräfte, die radial nach innen wirken, so daß das Schraubenantriebswerkzeug auf die Kegelfläche 36 zentriert wird. Die nicht kegelförmigen Teile der Seitenwand sind also so geformt, daß das Drehmoment beim Antrieb der Schraube zu einer Kraftkomponente in Umfangsrichtung und einer Kraftkomponente in radialer Richtung führt. Die Form der Seitenwand der Ausnehmung entspricht der Form nach der eingangs genannten WO-A-8 302 983.

## Patentansprüche

1. Schraube mit einem Schraubenantriebsende (1) und einer in diesem ausgebildeten Antriebsausbildung in Form einer Vertiefung (2), deren zum Kontakt mit einem Antriebswerkzeug während des Drehantriebs bestimmte Seitenwand (3) im radial äußeren und im radial inneren Bereich auf einer von einer Kreiszylinderfläche abweichenden Zylinderfläche mit einer zur Längsrichtung der Schraube parallelen Zylinderachse und zwischen den radial nach außen vorspringenden Teilen der Vertiefung (2) in einem in radialer Richtung zwischen dem maximalen und minimalen Durchmesser der Vertiefung (2) liegenden Bereich auf einer Kegelfläche (6) eines sich in das Innere der Vertiefung (2) hinein verjüngenden Kegels liegt, wobei die axiale Erstreckung der Kegelfläche (6) etwa der Tiefe der Vertiefung (2) entspricht.

2. Schraube mit einem Schraubenantriebsende (1) und einer an diesem angeordneten Antriebsausbildung in Form eines Antriebsvorsprungs, dessen zum Kontakt mit einem Antriebswerkzeug während des Antriebs bestimmte Seitenwand im radial äußeren und radial inneren Bereich auf einer von einer Kreiszylinderfläche abweichenden Zylinderfläche mit einer zur Längsrichtung der Schraube parallelen Zylinderachse und zwischen den radial nach außen vorspringenden Teilen des Antriebsvorsprungs in einem in radialer Richtung zwischen dem maximalen und dem minimalen Durchmesser des Antriebsvorsprungs liegenden Bereich auf einer Kegelfläche eines sich in Richtung auf das äußere Ende des Vorsprungs verjüngenden Kegels liegt, wobei die axiale Erstreckung der Kegelfäche (6) etwa der axialen Erstreckung des Antriebsvorsprungs entspricht.

3. Schraube nach Anspruch 1 oder 2, bei der die Kegelfläche im radial inneren Bereich der Seitenwand (3) der Antriebsausbildung liegt.

4. Schraube nach einem der vorhergehenden Ansprüche, bei der die Antriebsausbildung derart geformt ist, daß ein Querschnitt durch sie keine geradlinig verlaufenden Linien aufweist.

5. Schraube nach einem der vorhergehenden Ansprüche, bei der die zur Drehmomentübertragung dienenden Flächen der Antriebsausbildung derart geformt sind, daß sie keine Kraftkomponente in Längsrichtung der Schraube (1) erzeugen.

6. Schraube nach einem der vorhergehenden Ansprüche, bei der die Antriebsausbildung derart geformt ist, daß ein Querschnitt durch ihren zylindrischen Teil über ihre Höhe konstant ist.

7. Schraube nach einem der vorhergehenden Ansprüche, bei der der Außenumfang der Antriebsausbildung abwechselnd nach innen und außen vorspringt.

8. Schraube nach einem der vorhergehenden Ansprüche, bei der der Außenumfang der Antriebsausbildung abwechselnd nach innen und außen gerichtete Vorsprünge aufweist.

9. Schraube nach einem der vorhergehenden Ansprüche, bei der die zur Drehmomentübertragung dienenden Flächen der Antriebsausbildung derart geformt sind, daß sie beim Antrieb eine etwa radial nach innen wirkende Kraftkomponente erzeugen.

10. Schraube nach einem der vorhergehenden Ansprüche, bei der der kleinste Durchmesser der Kegelfläche der minimalen Querabmessung (11) gleich und/oder der größte Durchmesser (9) der Kegelfläche kleiner als die maximale Querabmessung der Antriebsausbildung ist.

11. Schraube nach einem der vorhergehenden Ansprüche, bei der die nicht auf der Kegelfläche (6) liegenden Teile der Seitenwand im wesentlichen parallel zur Längsachse der Schraube (1) verlaufen.

12. Schraubendreherwerkzeug mit einer der Antriebsausbildung der Schraube nach einem der vorhergehenden Ansprüche komplementären Form.

## Claims

1. Screw with a screw drive end (1) and a drive construction formed therein in the form of a recess (2), whose side wall (3) intended to come into contact with a drive tool during the rotary drive is located in the radially outer and in the radially inner area on a cylindrical surface diverging from a circular cylindrical surface with a cylinder axis parallel to the longitudinal direction of the screw and located between the radially outer, projecting parts of the recess (2) in an area located in the radial direction between the maximum and minimum diameters of the recess (2) on a conical surface (6) of a cone tapering into the interior of the recess (2), the axial extension of the conical surface (6) roughly corresponding to the depth of the recess (2).

2. Screw with a screw drive end (1) and a drive construction located thereon in the form a drive projection, whose side wall intended to come into contact with a drive tool during the drive in the radially outer and radially inner area rests on a cylinder surface diverging from a circular cylindrical surface with a cylinder axis parallel to the longitudinal direction of the screw and between the radially outwardly projecting parts of the drive projection located in an area positioned in the radial direction between the maximum and minimum diameters of the drive projection on a conical surface of a cone tapering in the direction of the outer end of the projection, the axial extension of the conical surface (6) roughly corresponding to the axial extension of the drive projection.

3. Screw according to claims 1 or 2, wherein the conical surface is in the radially inner area of the side wall (3) of the drive construction.

4. Screw according to one of the preceding claims, wherein the drive construction is shaped in such a way that a cross-section through it has no linearly directed lines.

5. Screw according to one of the preceding claims, wherein the surfaces of the drive construction used for torque transmission are shaped in such a way that they produce no force component in the longitudinal direction of the screw (1).

6. Screw according to one of the preceding claims, wherein the drive construction is shaped in such a way that a cross-section through its cylindrical part is constant over its height.

7. Screw according to one of the preceding claims, wherein the outer circumference of the drive construction alternately projects inwards and outwards.

8. Screw according to one of the preceding claims, wherein the outer circumference of the drive construction has alternately inwardly and outwardly directed projections.

9. Screw according to one of the preceding claims, wherein the surfaces of the drive construction used for torque transmission are shaped in such a way that during drive they produce a roughly radially inwardly acting force component.

10. Screw according to one of the preceding claims, wherein the smallest diameter of the conical surface is the same as the minimum transverse dimension (11) and/or the maximum diameter (9) of the conical surface is smaller than the maximum transverse dimension of the drive construction.

11. Screw according to one of the preceding claims, wherein the parts of the side wall not located on the conical surface (6) are substantially parallel to the longitudinal axis of the screw (1).

12. Screwdriver with a shape complementary to the drive construction of the screw according to one of the preceding claims.

## Revendications

1. Vis comprenant une extrémité d'entraînement de vis (1) et une configuration d'entraînement réalisée dans celle-ci, en forme d'empreinte (2), dont la paroi latérale (3) destinée à entrer en contact avec un outil d'entraînement pendant l'entraînement en rotation, se trouve, dans la zone radialement extérieure et dans la zone radialement intérieure, sur une surface cylindrique s'écartant d'une surface cylindrique circulaire et présentant un axe de cylindre parallèle à l'axe longitudinal de la vis, et, entre les parties de l'empreinte (2) qui saillent radialement vers l'extérieur, dans une zone située, dans le sens radial, entre les diamètres maximal et minimal de l'empreinte (2), sur une surface conique (6) d'un cône se rétrécissant vers l'intérieur de l'empreinte (2), l'extension axiale de la surface conique (6) correspondant à peu près à la profondeur de l'empreinte (2).

2. Vis comprenant une extrémité d'entraînement de vis (1) et une configuration d'entraînement disposée sur celle-ci, en forme de partie en relief d'entraînement, dont la paroi latérale destinée à entrer en contact avec un outil d'entraînement en cours d'entraînement, se trouve, dans la zone radialement extérieure et dans la zone radialement intérieure, sur une surface cylindrique s'écartant d'une surface cylindrique circulaire et présentant un axe de cylindre parallèle à l'axe longitudinal de la vis, et, entre les éléments de la partie en relief d'entraînement qui saillent radialement vers l'extérieur, dans une zone située, dans le sens radial, entre les diamètres maximal et minimal de la partie en relief d'entraînement, sur une surface conique d'un cône se rétrécissant en direction de l'extrémité extérieure de la partie en relief, l'extension axiale de la surface conique (6) correspondant à peu près à l'extension axiale de la partie en relief d'entraînement.

3. Vis selon la revendication 1 ou 2, dans laquelle la surface conique se trouve dans la zone radialement intérieure de la paroi latérale (3) de la configuration d'entraînement.

4. Vis selon l'une quelconque des revendications précédentes, dans laquelle la configuration d'entraînement a une forme telle que sa coupe ne présente pas de lignes d'extension rectiligne.

5. Vis selon l'une quelconque des revendications précédentes, dans laquelle les surfaces de la configuration d'entraînement qui servent à transmettre le moment de rotation, ont une forme telle qu'elles ne produisent pas de composante de force dans le sens longitudinal de la vis (1).

6. Vis selon l'une quelconque des revendications précédentes, dans laquelle la configuration d'entraînement a une forme telle qu'une coupe en hauteur de sa partie cylindrique est constante.

7. Vis selon l'une quelconque des revendications précédentes, dans laquelle le périmètre extérieur de la configuration d'entraînement saille alternativement vers l'intérieur et vers l'extérieur.

8. Vis selon l'une quelconque des revendications précédentes, dans laquelle le périmètre extérieur de la configuration d'entraînement présente des parties saillant alternativement vers l'intérieur et vers l'extérieur.

9. Vis selon l'une quelconque des revendications précédentes, dans laquelle les surfaces de la configuration d'entraînement qui servent à transmettre le moment de rotation, ont une forme telle que lors de l'entraînement, elles produisent une composante de force agissant plus ou moins radialement vers l'intérieur.

10. Vis selon l'une quelconque des revendications précédentes, dans laquelle le plus petit diamètre de la surface conique est égal à la dimension transversale minimale (11) de la configuration d'entraînement et/ou le plus grand diamètre (9) de la surface conique est inférieur à la dimension transversale maximale de la configuration d'entraînement.

11. Vis selon l'une quelconque des revendications précédentes, dans laquelle les parties de la paroi latérale qui ne reposent pas sur la surface conique (6), s'étendent d'une manière sensiblement parallèle à l'axe longitudinal de la vis (1).

12. Outil de vissage ayant une forme complémentaire de la configuration d'entraînement de la vis selon l'une quelconque des revendications précédentes.
